# EUROPÄISCHE PATENTSCHRIFT

(11) **EP 2 273 079 B1**
(45) Veröffentlichungstag und Bekanntmachung des Hinweises auf die Patenterteilung: **22.08.2012**
(21) Anmeldenummer: 10164309.6
(22) Anmeldetag: 28.05.2010
(51) Int. Cl.: F01N 3/035, F01N 3/023, F01N 3/022, F01N 3/20

(54) **Abgasnachbehandlungsvorrichtung**
Exhaust gas aftertreatment device
Dispositif post-traitement des gaz d'échappement

(30) Priorität: 10.06.2009 DE 102009024535
(43) Veröffentlichungstag der Anmeldung: 12.01.2011
(73) Patentinhaber: J. Eberspächer GmbH & Co. KG, 73730 Esslingen (DE)
(72) Erfinder: Wirth, Georg, 73230 Kirchheim/Teck (DE); Calvo, Silvia, 73730 Esslingen (DE)
(74) Vertreter: BRP Renaud & Partner

(56) Entgegenhaltungen:
- EP-A1- 1 752 629
- EP-A1- 1 892 394
- EP-A2- 1 348 843
- EP-A2- 1 371 826
- WO-A1-01/96717
- DE-A1-102006 051 790
- US-A1- 2008 132 405

## Beschreibung

Die vorliegende Erfindung betrifft eine Abgasnachbehandlungsvorrichtung für eine Abgasanlage einer Brennkraftmaschine, insbesondere eines Kraftfahrzeugs, mit den Merkmalen des Oberbegriffs des Anspruchs 1.

Abgasnachbehandlungsvorrichtungen werden üblicherweise durch das Aneinanderreihen von Bauteilen mit unterschiedlichen Funktionalitäten aufgebaut. Bspw. können heutzutage in einem Kraftfahrzeug im Abgasstrom einer Brennkraftmaschine ein Oxidationskatalysator, ein Partikelfilter, eine Zugabeeinrichtung mit einem optionalen Mischer, ggf. ein Hydrolysekatalysator, ein selektivkatalytischer Reduktionskatalysator (SCR-Katalysator) und ein Sperrkatalysator nacheinander eingebaut sein. Dabei werden durch den Oxidationskatalysator unverbrannte Kohlenwasserstoffe, Wasserstoff und Kohlenmonoxid mit Sauerstoff zu Kohlendioxid und Wasser umgesetzt, um den Abgasstrom weitgehend von unverbrannten Kohlenwasserstoffen und von Kohlenmonoxid zu befreien. Der Partikelfilter filtert aus dem Abgasstrom evtl. vorhandene Russpartikel sowie Feinstäube aus dem Abgas. In Abständen wird dieser Partikelfilter immer wieder durch Aufheizen soweit erhitzt, dass die durch den Partikelfilter zurückgehaltenen Russpartikel mit Sauerstoff zu Kohlendioxid abreagieren können. Dadurch wird der Partikelfilter regeneriert. Über die Zugabeeinrichtung mit einem optionalen Mischer wird üblicherweise eine Hamstoff-Wasser-Lösung ggf. mit Abgas in dem optionalen Mischer vermischt, wobei in diesem Falle gleichzeitig das Wasser verdampft und ein Fluid, enthaltend feinstverteilten Harnstoff bzw. Ammoniak, gebildet wird. An dieser Stelle kann auch ein Hydrolysekatalysator zur Hydrolyse des Harnstoffes in Ammoniak und CO₂ eingesetzt werden. Der Ammoniak wird wiederum benötigt, um evtl. während der Verbrennung des Kraftstoffes in der Brennkraftmaschine entstandene Stickoxide auf dem SCR-Katalysator durch selektivkatalytische Reduktion (SCR) mit Ammoniak zu Stickstoff und Wasser umzuwandeln. Am Ende dieser Aneinanderreihung von Katalysatoren wird üblicherweise ein Sperrkatalysator eingebaut, der überschüssige Ammoniakreste aus dem Abgasstrom zu Stickstoff, Stickoxiden und Wasser aufoxidiert, damit durch das Abgas nahezu keine Ammoniakreste an die Umwelt abgegeben werden.

Dies führt im ungünstigsten Fall zu fünf Bauelementen im Strang, wobei viermal zumindest teilweise keramlsche Katalysatoren in einem metallischen Gehäuse gelagert werden müssen. Neben dem hohen Platzbedarf und der enormen Kornplexität des Gesamtsystems ist der aufgrund der zwangsläufig großen thermischen Masse und aufgrund der großen Oberfläche auftretende hohe Wärmeverlust für einen ausfallsicheren Betrieb der Katalysatoren bei häufigen, kurzen Einsätzen des Kraftfahrzeugs kontraproduktiv. Deshalb wird bereits heutzutage versucht, mehrere Bauelemente zu Mehrfachbauteilen zusammen zu fassen. So ist derzeit ein Partikelfilter mit einer Oxidationskatalysatorbeschichtung üblich, wobei die Oxidationskatalysatorbeschichtung den Oxidationskatalysator mit dem Partikelfilter integriert ausbildet. Des Weiteren sind auch Kombinationen von Hydrolyse-, SCR- und Sperrkatalysator bekannt. Im günstigsten Falle verbleiben Jedoch durch die Zugabeeinrichtung für das Reduktionsmittel heutzutage zumindest drei hintereinander anzuordnende Bauelemente.

Aus der US 2008/132405 A1 ist eine Abgasnachbehandlungsvorrichtung für eine Abgasanlage einer Brennkraftmaschine bekannt, umfassed einen Partikelfilter und einen in Richtung eines Abgasstromes vor dem Partikelfilter angeordneten Oxidationskatalysator, wobei ein mehrere parallel durchströmbare Kanäle aufweisender Einsatz vorgesehen ist, der in einem einströmseitigen ersten Abschnitt eine Oxidationskatalysatorbeschichtung aufweist, die den Oxidationskatalysator ausbildet, und der in einem ausströmseitigen zweiten Abschnitt als der Partikelfilter mit ausströmseitig verschlossenen Einlasskanälen und einströmseitig nach dem ersten Abschnitt verschlossenen Auslasskanälen ausgebildet ist. Ferner ist eine Zugabeeinrichtung für ein Reduktionsmittel vorgesehen. Die Einlasskanäle sind mit einer SCR-Katalysatorbeschichtung versehen, die einen SCR-Katalysator zum Zersetzen des Reduktionsmittels bildet. Bei der bekannten Vorrichtung sind der Oxidationskatalysator und der Partikelfilter in separaten Gehäusen untergebracht und durch eine Verbindungsleitung miteinander verbunden. Die Zugabeeinrichtung ist an diese Verbindungsleitung abgeschlossen und kann das Reduktionsmittel in diese Verbindungsleitung einleiten.

Weitere Abgasnachbehandlungsvorrichtungen sind aus der EP 1 371 826 A2, aus der EP 1 762 629 A1 und aus der EP 1 348 843 A2 bekannt.

Die vorliegende Erfindung beschäftigt sich mit dem Problem, für eine Abgasnachbehandlungsvorrichtung eine verbesserte oder zumindest eine andere Ausführungsform anzugeben, die sich insbesondere durch einen geringeren Platzbedarf, eine geringe Komplexität und eine geringere Bauelementeanzahl auszeichnet.

Erfindungsgemäß wird dieses Problem durch den Gegenstand des unabhängigen Anspruchs gelöst Vorteilhafte Ausführungsformen sind Gegenstand der abhängigen Ansprüche.

Die Erfindung beruht auf dem allgemeinen Gedanken, einen mehrere parallel durchströmbare Kanäle aufweisenden Einsatz, in einem einströmseitigen ersten Abschnitt zumindest teilweise mit einer Oxidationskatalysatorbeschichtung zu versehen, die zumindest einen Oxidationskatalysator bildet, und einen ausströmseitigen zweiten Abschnitt als einen Partikelfilter mit ausströmseitig verschlossenen Einlasskanälen und einströmseitig nach dem ersten Abschnitt verschlossenen Auslasskanälen auszubilden. Ferner ist mindestens eine Zugabeeinrichtung für ein Reduktionsmittel vorgesehen. Vorteilhaft an dieser Konstruktionsweise sind der durch die Integration von Partikelfilter und Oxidationskatalysator erreichte geringere Platzbedarf und die Reduktion der Komplexität der Abgasnachbehandlungsvorrichtung.

Weiter ist gemäß der Erfindung vorgesehen, durch zumindest teilweises Aufbringen einer SCR-Katalysatorbeschichtung auf zumindest einige der Kanäle des zweiten Abschnitts, insbesondere der Einlasskanäle, die Integration von zumindest einem SCR-Katalysator in die Abgasnachbehandlungsvorrichtung zu realisieren. Dies führt zu einer weiteren Reduktion an Platzbedarf und Komplexität.

Des Weiteren ist die erfindungsgemäße Abgasnachbehandlungsvorrichtung mit seitlichen Aussparungen versehen, in die die Zugabeeinrichtung das Reduktionsmittel bzw. ein Reduktionsmittel-Abgasgemisch einbringen kann. Vorzugsweise sind solche seitlichen Aussparungen als Bohrung oder Ausfräsung ausgebildet. Diese integrative Konstruktionsweise führt ebenso zu einem geringeren Platzbedarf und zu einer kleineren Wärme abstrahlenden Oberfläche.

Schließlich ist bei der Erfindung vorgesehen, dass der jeweilige Einsatz einstückig bzw. monolithisch ausgebildet ist.

Weiter ist es gemäß einer besonderen Ausführungsform möglich, durch zumindest teilweises Aufbringen einer Sperrkatalysatorbeschichtung auf die Auslasskanäle, eine weitere Integration von zumindest einem Sperrkatalysator in die Abgasnachbehandlungsvorrichtung zu realisieren. Dies führt zu einer weiteren Reduktion an Platzbedarf und Komplexität. Mit anderen Worten werden hierbei nur zumindest einige der Einlasskanäle zumindest teilweise mit der SCR-Katalysatorbeschichtung zu versehen und zumindest einige der Auslasskanäle zumindest teilweise mit einer Sperrkatalysatorbeschichtung zu versehen, die

dann einen Sperrkatalysator zum Zersetzen von überschüssigem Ammoniak im Abgasstrom ausbildet. Dadurch sind der Platzbedarf und die Komplexität der Abgasnachbehandlung weiter reduziert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen Längsschnitt durch eine Abgasnachbehandlungsvorrichtung,
- Fig. 2: einen Querschnitt durch die Abgasnachbehandlungsvorrichtung in einer Schnittebene A gemäß Fig. 1,
- Fig. 3: eine Aufsicht auf eine Abgasnachbehandlungsvorrichtung mit einer Mischeinrichtung zur Mischung von Abgas und Reduktionsmittel,
- Fig. 4: einen Querschnitt durch die Abgasnachbehandlungsvorrichtung in einer Schnittebene B gemäß Fig. 3 mit zwei viertelkreisförmigen Ausfräsungen,
- Fig. 5: einen Querschnitt durch die Abgasnachbehandlungsvorrichtung in einer Schnittebene C gemäß Fig. 3 mit zwei weiteren viertelkreis- förmigen Ausfräsungen,
- Fig. 6: einen Querschnitt durch die Abgasnachbehandlungsvorrichtung mit zwei kreisförmigen beziehungsweise kugelförmigen seitlichen Ein- schnitten,
- Fig. 7: einen Querschnitt durch die Abgasnachbehandlungsvorrichtung mit drei kreisförmigen beziehungsweise kugelförmigen seitlichen Ein- schnitten.

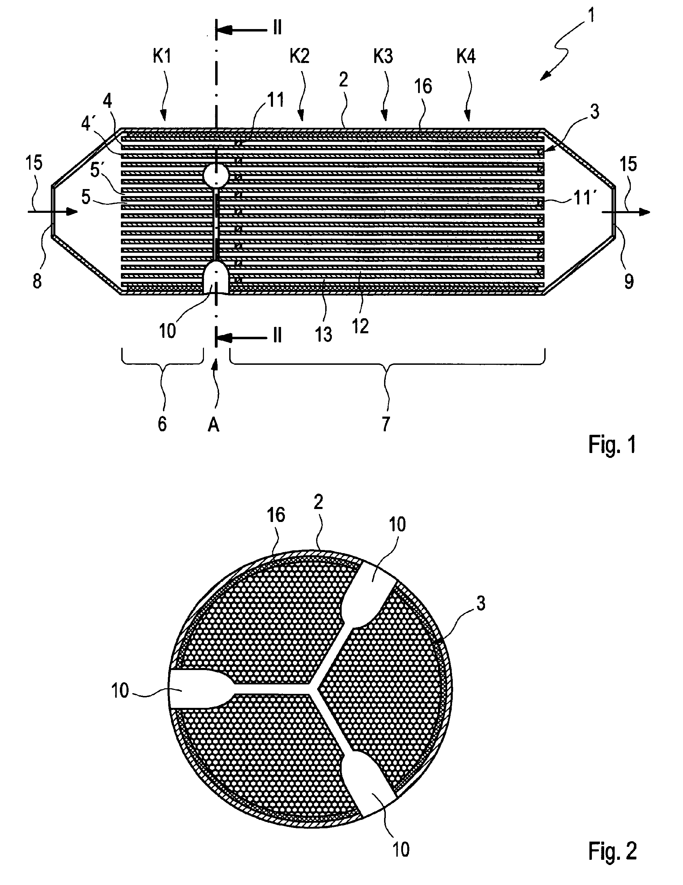

Gemäß Fig. 1 weist eine Abgasnachbehandlungsvorrichtung 1, die bei einer Abgasanlage einer Brennkraftmaschine, insbesondere eines Kraftfahrzeugs, zur Anwendung kommen kann, einen in einem Gehäuse 2 angeordneten Einsatz 3 auf. Dieser Einsatz 3 ist mit mehreren von Kanalwänden 4, 4' umgebenen und parallel angeordneten Kanälen 5, 5' ausgestattet. Dabei lässt sich der Einsatz 3 in einen einströmseitigen, ersten Abschnitt 6 und einen ausströmseitigen, zweiten Abschnitt 7 unterteilen. Die Strömungsrichtung des Abgases ist in Fig. 1 durch Pfeile 15 angedeutet.

Das Gehäuse 2 weist im Bereich des ersten Abschnittes 6 eine Einströmöffnung 8 und im Bereich des zweiten Abschnittes 7 eine Ausströmöffnung 9 auf. An dem der Einströmöffnung 8 entgegengesetzt angeordneten Ende des ersten Abschnittes 6 ist die Abgasnachbehandlungsvorrichtung 1 mit zumindest einer Aussparung 10 in Form einer Bohrung ausgestattet.

Die Kanäle 5, 5' sind im zweiten Abschnitt 7 wechselseitig und bzgl. des zweiten Abschnittes 7 endseitig mit Verschlusspfropfen 11, 11' so verschlossen, dass sie je nach Anordnung der Verschlusspfropfen 11, 11' mehrere Einlasskanäle 12 und mehrere Auslasskanäle 13 ausbilden. Dabei ist jeweils ein Einlasskanal 12 mit einem zur Ausströmöffnung 9 orientierten Verschlusspfropfen 11' verschlossen, während jeweils ein Auslasskanal 13 einen Verschlusspfropfen 11 im Übergangsbereich von dem ersten Abschnitt 6 zum zweiten Abschnitt 7 aufweist. Somit ist ein Einlasskanal 12 zu der Einströmöffnung 8 orientiert offen und in Richtung der Ausströmöffnung 9 mit einem Verschlusspfropfen 11' verschlossen, während ein Auslasskanal 13 durch einen Verschlusspfropfen 11 im Übergangsbereich vom ersten Abschnitt 6 zum zweiten Abschnitt 7 verschlossen ist und zu der Ausströmöffnung 9 orientiert offen ist. Dementsprechend wird ein durch die Einströmöffnung 8 in die Abgasnachbehandlungsvorrichtung 1 eintretender Abgasstrom die Kanäle 5, 5' durchströmen, bis einige der Kanäle 5, 5' einen Verschlusspfropfen 11 aufweisen, der den Abgasstrom in diesen Kanälen 5 am Weiterströmen hindert. Der Abgasstrom wird dann in diesen Kanälen 5 durch die Kanalwände 4, 4' in die Kanäle 5' übertreten und bis zu den Verschlusspfropfen 11' im Bereich der Ausströmöffnung 9 durch die Einlasskanäle 12 strömen, um dann durch die Kanalwände 4, 4' in die Auslasskanäle 13 hindurchgepresst zu werden. Der Abgasstrom verlässt schließlich die Auslasskanäle 13 in Richtung der Ausströmöffnung 9.

In dem ersten Abschnitt 6 des Einsatzes 3 ist auf den Kanalwänden 4, 4' der Kanäle 5, 5' eine Oxidationskatalysatorbeschichtung aufbringbar. Durch diese Oxidationskatalysatorbeschichtung wird im ersten Abschnitt 6 zumindest ein Oxidationskatalysator K1 ausgebildet. Durch diesen zumindest einen Oxidationskatalysator K1 ist es möglich, den Gehalt an unverbrannten Kohlenwasserstoffen und Kohlenmonoxid im Abgas durch Oxidation dieser Schadstoffe auf dem Oxidationskatalysator K1 mit Sauerstoff zu reduzieren.

Am Ende des ersten Abschnittes 6 sind Aussparungen 10 vorgesehen, durch die mittels einer Zugabeeinrichtung 17 und/oder Mischeinrichtung 14 ein Reduktionsmittel in die Abgasnachbehandlungsvorrichtung 1 eingebracht werden kann. Zweckmäßigerweise wird dabei durch nicht dargestellte Einspritzdüsen als Reduktionsmittel z. B. eine Harnstoff-Wasser-Lösung nach z. B. Vorgabe des Betriebspunktes der Brennkraftmaschine eingespritzt. Es kann aber auch direkt Ammoniak oder auch z. B. Kraftstoff in die Aussparungen 10 eingespritzt werden. Im Falle von z. B. Kraftstoff dient bei einer entsprechenden katalytischen Beschichtung der entsprechenden Kanäle, insbesondere der Einlasskanäle, dieser zur Regeneration eines nach den Aussparungen 10 in Richtung des Abgasstromes angeordneten Partikelfilters K3. Dabei wird durch exotherme Reaktion des Kraftstoffes mit Sauerstoff auf der angepassten Beschichtung der Partikelfilter K3 so stark aufgeheizt, dass sich der Partikelfilter K3 durch Abreaktion der Russpartikel mit Sauerstoff regenerieren kann. Neben dem verringerten Platzbedarf findet auch eine sehr gute Vermischung z. B. der Harnstoff-Wasser-Lösung durch das Einspritzen auf den heißen Einsatz 3 statt. Dabei kann die Vermischung durch mehrere miteinander verbundene Aussparungen, wie in Fig. 2 gezeigt, unterstützt werden.

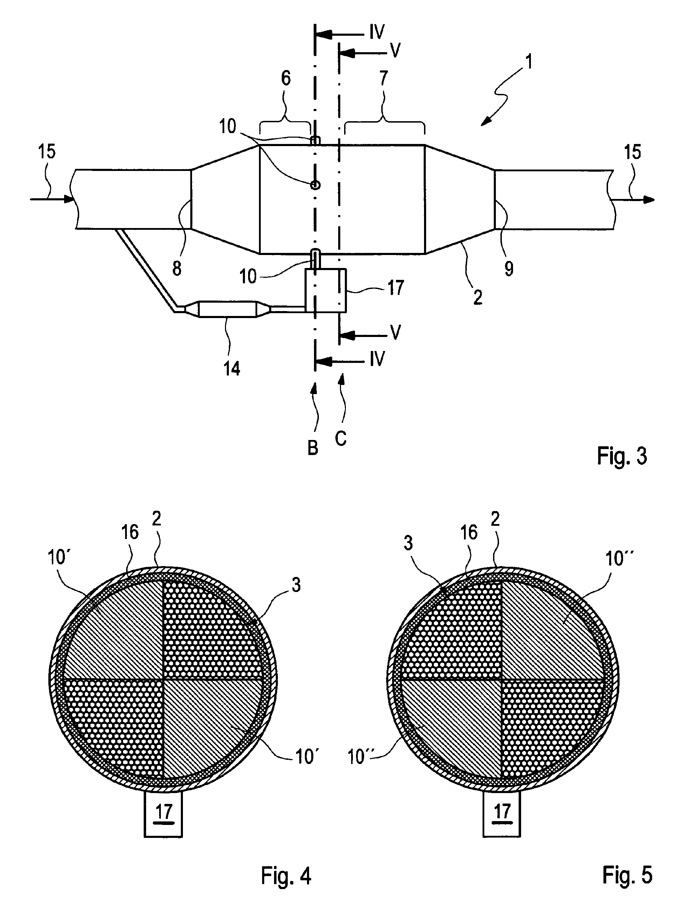

Des Weiteren kann, wie in Fig. 3 dargestellt, durch eine Mischeinrichtung 14 das Reduktionsmittel, wie z. B. eine Harnstoff-Wasser-Lösung, auch mit aus dem Abgasstrom abgezweigtem Abgas vermischt werden und z. B. nach dem Verdampfen des Wassers der Harnstoff-Wasser-Lösung durch die Aussparungen 10, 10', 10" in den Einsatz 3 eingepresst werden.

Dabei sind nicht nur Aussparungen 10, 10', 10" in Form einer Bohrung 10, wie in Fig. 2 gezeigt, denkbar, sondern auch räumlich in Richtung des Abgasstromes abfolgende, alternierend angeordnete und in ihrer Gesamtheit den Querschnitt des Einsatzes 3 vollständig abdeckende Ausfräsungen 10', 10" gemäß Fig. 4 bzw. Figur 5.

So könnte, wie in Fig. 4 dargestellt, in einer Ebene B gemäß Fig. 3 zwei Aussparungen 10' in Form von zwei gegenüberliegenden Viertelkreisen so angeordnet sein, dass, wie in Fig. 5 gezeigt, in einer Ebene C gemäß Fig. 3 zwei Aussparungen 10" ebenfalls in Form zwei gegenüberliegender Viertelkreise zusammen sämtliche Kanäle 5, 5' abdecken. Durch die Art der Anordnung solcher Ausfräsungen 10', 10" ist es möglich, das z. B. über die Zugabeeinrichtung 17 und/oder Mischeinrichtung 14 in die Aussparungen 10', 10" eingebrachte Reduktionsmittel über alle Kanäle 5, 5' gleichmäßig zu verteilen.

Alternativ können solche Aussparungen 10', 10" auch in einer anderen Form als ein Viertelkreis ausgebildet sein, über mehr als zwei Ebenen B, C verteilt sein und des Weiteren auch sich gegenseitig überlappend ausgeformt sein.

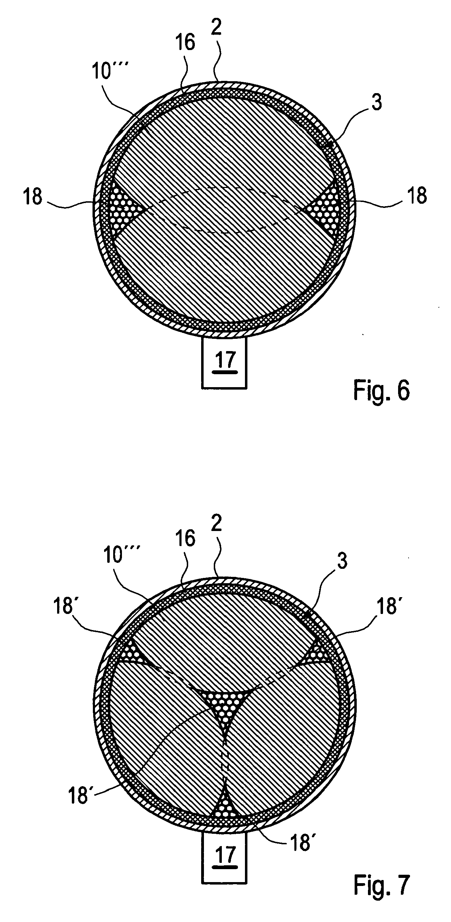

In einer bevorzugten Ausführungsform ist die Aussparung 10"', wie in Figur 6 und in Figur 7 dargestellt, als zumindest ein kreisbogenförmiger oder bogenförmiger seitlicher Einschnitt ausgebildet. Solche kreisförmige bzw. bogenförmige Einschnitte sind fertigungstechnisch besonders einfach auszubilden, da sie z.B. mit einer Scheibenfräse oder einer Schleifscheibe hergestellt werden können. Zu diesem Zweck wird man von außen einmal oder mehrmals in den Einsatz 3 hineinfräsen, um möglichst große Bereiche zu verbinden und nur kleine Stege 18,18' stehen zu lassen, die bei der Montage den Einsatz 3 zusammenhalten. Ein späterer Bruch dieser Stege 18,18' und damit ein Zerfallen des Einsatzes 3 in zwei Teile beeinträchtigt die Funktion und die Haltbarkeit der Abgasnachbehandlungsvorrichtung 1 nicht. Je nach Anordnung und Anzahl der Einschnitte lassen sich randständige Stege 18, 18' und/oder Stege 18' innerhalb des Einsatzes 3 ausbilden.

Vorzugsweise sind im zweiten Abschnitt 7 die Kanalwände 4, 4' in den Einlasskanälen 12 mit einer SCR-Katalysatorbeschichtung ausgestattet. Diese SCR-Katalysatorbeschichtung bildet zumindest einen SCR-Katalysator K2 aus. Dieser kann die im Abgasstrom auftretenden Stickoxide mit dem in die Aussparungen 10, 10', 10" eingebrachten Reduktionsmittel so reagieren lassen, dass die Stickoxide reduziert werden. Vorzugsweise wird dies mit Ammoniak bzw. einer Harnstoff-Wasser-Lösung bewerkstelligt, wobei der Ammoniak mit den Stickoxiden zu Stickstoff und Wasser reagiert.

Wenn der in die Einlasskanäle 12 eintretende Abgasstrom durch die ausströmseitig angeordneten Verschlusspfropfen 11' am Weiterströmen gehindert wird, tritt der Abgasstrom durch die Kanalwände 4, 4' hindurch. Dabei wirken die Kanalwände 4, 4' als Partikelfilter K3, der in dem Abgas enthaltene Russpartikel und Feinststäube zurückhält. Vorzugsweise weisen die Kanalwände 4, 4' einen hochporösen, leichten Grundwerkstoff, wie z. B. Cordierith, Aluminiumoxid, Mulith oder Aluminiumtitanat auf. Aufgrund der hochporösen Struktur ist das Aufbringen größerer katalytischer Aktivität durch größere Washcoat-Mengen ermöglicht. Durch geeignete Ausbildung der Kanalwände 4, 4' kann zudem eine Regeneration des Partikelfilters K3 durch exotherme Reaktionen von Kraftstoff oder Teilverbrennungsprodukten des Kraftstoffes mit Sauerstoff erleichtert werden.

Die Auslasskanäle 13 können wiederum mit einer Sperrkatalysatorbeschichtung ausgestattet sein, die dafür sorgt, dass den SCR-Katalysator K2 passierendes, überschüssiges Ammoniak durch den Sperrkatalysator K4 aufoxidiert wird, sodass die Menge an Ammoniak im Abgas reduziert werden kann. Durch den Sperrkatalysator K4 bilden sich allerdings wiederum ggf. Stickoxide, weshalb die eingespritzte Menge an Ammoniak genau dosiert werden sollte.

In einer bevorzugten Ausführungsform weist die Abgasnachbehandlungsvorrichtung 1 nur einen Einsatz 3 auf. Dieser Einsatz 3 kann aus mehreren Teilen bestehen, ist aber bevorzugt einteilig bzw. einstückig ausgeformt und insbesondere aus einem keramischen und/oder metallischen Monolithen aufgebaut. In einem solchen Einsatz 3 sind ein Oxidationskatalysator K1, ein SCR-Katalysator K2, ein Partikelfilter K3 und ein Sperrkatalysator K4 integral miteinander ausgebildet und ein solcher Einsatz kann zudem zumindest eine Aussparung 10, 10', 10" zur Aufnahme einer Zugabeeinrichtung 17 bzw. Mischeinrichtung 14 aufweisen.

Vorzugsweise weist ein solcher einteiliger Einsatz 3 einen als Oxidationskatalysator K1 ausgebildeten ersten Abschnitt 6 und einen als SCR-Katalysator K2, Partikelfilter K3 und Sperrkatalysator K4 ausgebildeten zweiten Abschnitt 7 auf. Beide Abschnitte 6, 7 sind bevorzugt einstückig bzw. monolithisch miteinander ausgeformt. Es können die beiden Abschnitte 6, 7 auch jeweils einzeln monolithisch ausgeformt und aneinander befestigt sein. In diesem Fall kann auf die Aussparungen 10, 10', 10" verzichtet werden und der Abschnitt 6 über ein in den Figuren nicht gezeigtes Kopplungsstück mit dem Abschnitt 7 verbunden werden. Dabei kann ein solches Kopplungsstück die Funktion der Aussparungen 10, 10', 10" ersetzen. Dadurch ist zum Einen der Einsatz einfacher herzustellen und zum Anderen kann man auf die schwer darzustellenden und den Einsatz in seiner Stabilität schwächenden Ausformungen 10, 10', 10" verzichten.

Vorzugsweise ist der Einsatz 3 mittels nur einer Lagereinrichtung 16, z. B. in Form einer Lagermatte, in nur einem Gehäuse 2 gelagert. Dabei wird der einteilige Einsatz 3 in einer Abgaströmungsrichtung 15 vom Abgas durchströmt, ohne dass das Abgas im Gehäuse umgelenkt werden muss, um zur nächsten Katalysatorkomponente geleitet werden zu können. Dabei können die Katalysatorkomponenten axial hintereinander in einem röhrenförmigen Gehäuse 2 angeordnet sein.

Im Falle eines einteiligen Einsatzes 3 sind die Verschlusspfropfen 11, die die Auslasskanäle 13 einströmseitig verschließen, von der Einströmöffnung 17 des Einsatzes 3 axial beabstandet.

## Patentansprüche

1. Abgasnachbehandlungsvorrichtung (1) für eine Abgasanlage einer Brennkraftmaschine, insbesondere eines Kraftfahrzeugs,
- mit einem Partikelfilter (K3),
- mit mindestens einem in Richtung eines Abgasstromes vor dem Partikelfilter (K3) angeordneten Oxidationskatalysator (K1),
- wobei ein mehrere parallel durchströmbare Kanäle (5,5') aufweisender Einsatz (3) vorgesehen ist, der in einem einströmseitigen ersten Abschnitt (6) eine Oxidationskatalysatorbeschichtung aufweist, die einen solchen Oxidationskatalysator (K1) ausbildet, und der in einem ausströmseitigen zweiten Abschnitt (7) als ein solcher Partikelfilter (K3) mit ausströmseitig verschlossenen Einlasskanälen (12) und einströmseitig nach dem ersten Abschnitt (6) verschlossenen Auslasskanälen (13) ausgebildet ist,
- wobei mindestens eine Zugabeeinrichtung (17) für ein Reduktionsmittel vorgesehen ist,
- wobei zumindest einige der Einlasskanäle (12) zumindest teilweise mit einer SCR-Katalysatorbeschichtung versehen sind, die zumindest einen SCR-Katalysator (K2) zum Zersetzen des Reduktionsmittels bildet, **dadurch gekennzeichnet,**
- **dass** der Einsatz (3) einstückig und/oder monolithisch ausgebildet sind/ist,
- **dass** der Einsatz (3) in dem ersten Abschnitt (6) mit zumindest einer seitlichen Aussparung (10,10',10") versehen ist, in die die Zugabeeinrichtung (17) das Reduktionsmittel bzw. ein Reduktionsmittel-Abgasgemisch einbringen kann.

2. Abgasnachbehandlungsvorrichtung nach Anspruch 1,
**dadurch gekennzeichnet,**
**dass** die Auslasskanäle (13) einströmseitig durch von der Einströmöffnung (8) beabstandete Pfropfen (11) verschlossen sind.

3. Abgasnachbehandlungsvorrichtung nach einem der vorhergehenden Ansprüche,
**dadurch gekennzeichnet,**
**dass** zumindest einige der Auslasskanäle (13) zumindest teilweise mit einer Sperrkatalysatorbeschichtung versehen sind, die zumindest einen Sperrkatalysator (K4) zum Zersetzen des Reduktionsmittels bildet.

4. Abgasnachbehandlungsvorrichtung nach Anspruch 3,
**dadurch gekennzeichnet,**
**dass** der zweite Abschnitt (7) zumindest einen solchen SCR-Katalysator (K2), zumindest einen solchen Partikelfilter (K3) und zumindest einen solchen Sperrkatalysator (K4) integral ausgebildet.

5. Abgasnachbehandlungsvorrichtung nach einem der Ansprüche 3 bis 5,
**dadurch gekennzeichnet,**
**dass** zumindest ein solcher Oxidationskatalysator (K1), zumindest ein solcher SCR-Katalysator (K2), zumindest ein solcher Partikelfilter (K3) und zumindest ein solcher Sperrkatalysator (K4) integral zu dem Einsatz (3) ausgebildet sind.

6. Abgasnachbehandlungsvorrichtung nach Anspruch 8,
**dadurch gekennzeichnet,**
**dass** eine solche seitliche Aussparung (10,10',10") als Bohrung (10) oder Ausfräsung (10',10"), insbesondere als kreisförmige beziehungsweise bogenförmige Ausfräsung (10"'), ausgebildet ist.

7. Abgasnachbehandlungsvorrichtung nach einem der vorhergehenden Ansprüche,
**dadurch gekennzeichnet,**
**dass** Abgasbehandlungseinrichtung als Trägersubstrat Cordierit und/oder Aluminiumoxid und/oder Mullit und/oder Aluminiumtitanat aufweist.

8. Abgasnachbehandlungsvorrichtung nach einem der vorhergehenden Ansprüche,
**dadurch gekennzeichnet,**
**dass** eine Mischeinrichtung (14) als eine Zugabeeinrichtung (17) und/oder über eine Zugabeeinrichtung (17) an die Abgasnachbehandlungsvorrichtung angeschlossen ist und/oder dass eine Mischeinrichtung (14) entlang einer Abgasströmungsrichtung (15) vor der Abgasnachbehandlungsvorrichtung an ein Abgasrohr angeschlossen ist.

9. Abgasnachbehandlungsvorrichtung nach einem der vorhergehenden Ansprüche,
**dadurch gekennzeichnet,**
**dass** der einteilige Einsatz (3) von einem Gehäuse (2) umgeben ist und/oder in dem Gehäuse (2) durch eine Lagereinrichtung (16), insbesondere durch eine Lagermatte, gehaltert ist.

## Claims

1. An exhaust gas retreatment device (1) for an exhaust system of a combustion engine, in particular of a motor vehicle,
- with a particle filter (K3),
- with at least one oxidation catalytic converter (K1) arranged in direction of an exhaust gas flow upstream of the particle filter (K3),
- wherein an insert (3) comprising a plurality of channels (5, 5') which can be subjected to a parallel throughflow is provided, which in a first section (6) on the inflow side comprises an oxidation catalytic converter coating, which forms such an oxidation catalytic converter (K1), and which in a second section (7) on the outflow side is formed as such a particle filter (K3) with inlet channels (12) closed off on the outflow side and outlet channels (13) closed off on the inflow side after the first section (6),
- wherein at least one adding device (17) for a reduction agent is provided,
- wherein at least some of the inlet channels (12) are at least partially provided with an SCR catalytic converter coating, which forms at least one SCR catalytic converter (K2) for decomposing the reduction agent,
**characterized**
- **in that** the insert (3) is/are designed unitarily and/or monolithically,
- **in that** the insert (3) in the first section (6) is provided with at least one lateral recess (10, 10', 10"), in which the adding device (17) can introduce the reduction agent or a reduction agent exhaust gas mixture.

2. The exhaust gas retreatment device according to Claim 1, **characterized in that** the outlet channels (13) on the inflow side are closed off through plugs (11) spaced from the inflow opening (8).

3. The exhaust gas retreatment device according to any one of the preceding claims, **characterized in that** at least some of the outlet channels (13) are at least partially provided with a blocking catalytic converter coating, which forms at least one blocking catalytic converter (K4) for decomposing the reduction agent.

4. The exhaust gas retreatment device according to Claim 3, **characterized in that** the second section (7) integrally forms at least one such SCR catalytic converter (K2), at least one such particle filter (K3) and at least one such blocking catalytic converter (K4).

5. The exhaust gas retreatment device according to any one of the Claims 3 to 5, **characterized in that** at least one such oxidation catalytic converter (K), at least one such SCR catalytic converter (K2), at least one such particle filter (K3) and at least one such blocking catalytic converter (K4) are formed integrally to the insert (3).

6. The exhaust gas retreatment device according to Claim 8, **characterized in that** such a lateral recess (10, 10', 10") is embodied as bore (10) or milled-out portion (10', 10"), in particular as circular or arch-shaped milled-out portion (10"').

7. The exhaust gas retreatment device according to any one of the preceding claims, **characterized in that** the exhaust gas retreatment device as carrier substrate comprises cordierite and/or aluminium oxide and/or mullite and/or aluminium titanate.

8. The exhaust gas retreatment device according to any one of the preceding claims, **characterized in that** a mixing device (14) is connected to the exhaust gas retreatment device as an adding device (17) and/or via an adding device (17) and/or **in that** a mixing device (14) is connected to an exhaust pipe along an exhaust gas flow direction (15) in front of the exhaust gas retreatment device.

9. The exhaust gas retreatment device according to any one of the preceding claims, **characterized in that** the single-piece insert (3) is surrounded by a housing (2) and/or mounted in the housing (2) through a bearing device (16), in particular through a bearing mat.

## Revendications

1. Dispositif de traitement ultérieur de gaz brûlés (1) pour une installation d'échappement d'un moteur à combustion interne, en particulier d'un véhicule automobile,
- doté d'un filtre à particules (K3),
- d'au moins un catalyseur à oxydation (K1) disposé en direction d'un flux de gaz brûlés en amont du filtre à particules (K3),
- un insert (3) présentant plusieurs canaux (5, 5') pouvant être traversés en parallèle étant prévu, lequel présente dans une première partie (6) côté entrée un revêtement catalyseur à oxydation, qui forme un tel catalyseur à oxydation (K1), et qui est conçu dans une seconde partie (7) côté sortie sous forme d'un tel filtre à particules (K3) avec des canaux d'entrée (12) fermés côté sortie et des canaux de sortie (13) fermés côté entrée après la première partie (6),
- au moins un dispositif d'addition (17) étant prévu pour un agent de réduction,
- au moins certains des canaux d'entrée (12) étant dotés au moins en partie d'un revêtement catalyseur SCR, lequel forme au moins un catalyseur SCR (K2) pour la décomposition de l'agent de réduction,
**caractérisé**
- **en ce que** l'insert (3) est conçu d'un seul tenant et/ou de façon monolithe,
- **en ce que** l'insert (3) est doté dans la première partie (6) d'au moins un évidement (10, 10', 10") latéral, dans lequel le dispositif d'addition (17) peut introduire l'agent de réduction ou un mélange agent de réduction-gaz brûlés.

2. Dispositif de traitement postérieur de gaz brûlés selon la revendication 1,
**caractérisé**
**en ce que** les canaux de sortie (13) sont fermés côté entrée par des bouchons (11) espacés de l'ouverture d'entrée (8).

3. Dispositif de traitement postérieur de gaz brûlés selon l'une des revendications précédentes,
**caractérisé**
**en ce qu'**au moins certains des canaux de sortie (13) sont dotés au moins en partie d'un revêtement catalyseur de blocage, qui forme au moins un catalyseur de blocage (K4) pour la décomposition de l'agent de réduction.

4. Dispositif de traitement postérieur de gaz brûlés selon la revendication 3,
**caractérisé**
**en ce que** la seconde partie (7) présente de façon intégrée au moins un tel catalyseur SCR (K2), au moins un tel filtre à particules (K3) et au moins un tel catalyseur de blocage (K4).

5. Dispositif de traitement postérieur de gaz brûlés selon l'une des revendications 3 à 5,
**caractérisé**
**en ce qu'**au moins un tel catalyseur à oxydation (K1), au moins un tel catalyseur SCR (K2), au moins un tel filtre à particules (K3) et au moins un tel catalyseur de blocage (K4) sont conçus de façon intégrée par rapport à l'insert (3).

6. Dispositif de traitement postérieur de gaz brûlés selon la revendication 8,
**caractérisé**
**en ce qu'**un tel évidement (10, 10', 10") latéral est conçu sous forme d'alésage (10) ou de fraisage (10', 10"), en particulier sous forme de fraisage (10"') en forme de cercle et/ou d'arc.

7. Dispositif de traitement postérieur de gaz brûlés selon l'une des revendications précédentes,
**caractérisé**
**en ce que** le dispositif de traitement postérieur de gaz brûlés présente comme substrat de support de la cordiérite et/ou de l'oxyde d'aluminium et/ou de la mullite et/ou du titanate d'aluminium.

8. Dispositif de traitement postérieur de gaz brûlés selon l'une des revendications précédentes,
**caractérisé**
**en ce qu'**un dispositif de mélange (14) est raccordé sous forme d'un dispositif d'addition (17) et/ou par un dispositif d'addition (17) au dispositif de traitement postérieur de gaz brûlés et/ou en ce qu'un dispositif de mélange (14) est raccordé le long d'un sens d'écoulement de gaz brûlés (15) en amont du dispositif de traitement postérieur de gaz brûlés à un tuyau d'échappement.

9. Dispositif de traitement postérieur de gaz brûlés selon l'une des revendications précédentes,
**caractérisé**
**en ce que** l'insert (3) d'un seul tenant est entouré d'un boîtier (2) et/ou est fixé dans le boîtier (2) par un dispositif de palier (16), en particulier par un tapis de palier.
